# EUROPÄISCHE PATENTSCHRIFT

(11) **EP 1 251 084 B1**
(45) Veröffentlichungstag und Bekanntmachung des Hinweises auf die Patenterteilung: **30.06.2004**
(21) Anmeldenummer: 02008742.5
(22) Anmeldetag: 18.04.2002
(51) Int. Cl.: B65G 17/30, B65G 45/18

(54) **Förderkette mit Bürstenelement**
Conveyor chain having brush element
Chaîne transporteuse avec élement de brosse

(30) Priorität: 20.04.2001 DE 10119437
(43) Veröffentlichungstag der Anmeldung: 23.10.2002
(73) Patentinhaber: JOH. WINKLHOFER & SÖHNE GmbH & Co KG, D-81369 München (DE)
(72) Erfinder: Teuber, Toralf, 85375 Neufahrn (DE)
(74) Vertreter: Grünecker, Kinkeldey, Stockmair & Schwanhäusser Anwaltssozietät

(56) Entgegenhaltungen:
- EP-A- 0 450 734
- EP-A- 0 764 599
- EP-A- 1 024 097
- PATENT ABSTRACTS OF JAPAN vol. 014, no. 262 (M-0981), 6. Juni 1990 (1990-06-06) & JP 02 075513 A (TOSHIBA CORP), 15. März 1990 (1990-03-15)
- PATENT ABSTRACTS OF JAPAN vol. 1996, no. 12, 26. Dezember 1996 (1996-12-26) & JP 08 217215 A (OSAME KOGYO:KK), 27. August 1996 (1996-08-27)

## Beschreibung

Die vorliegende Erfindung betrifft eine Förderkette mit abwechselnd aneinander gereihten Innen- und Außenkettengliedern, die jeweils über ein Kettengelenk miteinander verbunden sind und das Kettengelenk eine Hülse des Innenkettengliedes und einen sich durch die Hülse erstreckenden Bolzen des Außenkettengliedes umfasst, wobei zumindest ein Bürstenelement vorgesehen ist, das zumindest eine Befestigungsaufnahme umfasst, und das Bürstenelement mit der Befestigungsaufnahme im Wesentlichen formschlüssig auf einem Innenkettenglied angeordnet ist.

Im Stand der Technik gibt es eine ganze Reihe von Förderketten, die den oben beschriebenen Aufbau aufweisen. Eine dieser Arten ist eine Stauförderkette. Eine Stauförderkette weist zum einen Laufrollen zur Führung und für das Eingreifen der Kettenräder und zum anderen Staurollen auf, die der Lastaufnahme dienen und im Staufall für ein Entlangrollen an dem zu fördernden Gut sorgen. Es gibt einfache Stauförderketten, bei denen das Außenkettenglied zwei parallele Außenlaschen und zwei diese miteinander verbindende Bolzen und das Innenkettenglied zwei parallele Innenlaschen und zwei diese miteinander verbindende Hülsen umfasst. Üblicherweise ist auf jeder zweiten Hülse eine Staurolle frei drehbar angeordnet. Um eine größere Überlappung von Staurollen zu erzielen, gibt es auch eine Variante, bei der das Innenkettenglied aus zwei Hülsen und eine mittig zu diesem angeordnete Mittenlasche aufgebaut ist. Bei dieser Variante werden schmalere Staurollen verwendet, die sich bei der ersten Hülse rechts von der Mittenlasche und bei der nächsten Hülse links von der Mittenlasche befindet, so dass sich die Staurollen zick-zack-förmig abwechseln und eine teilweise Überdeckung geschaffen ist. In einer Reihe sind dann wiederum nur Staurollen auf jeder zweiten Hülse angeordnet. Solche Förderketten sind weit verbreitet im Einsatz. Die Führung der Ketten erfolgt in aller Regel in einem speziellen Schienensystem, das bei Spezialstauförderketten, auch zur Seitenbogenführung verwendet werden kann. Probleme bereiten bei derartigen Anordnungen teilweise die in das Schienensystem eindringenden Schmutzpartikel. Bei einigen Kettentypen ist es bereits bekannt, Abdeckungen vorzusehen, die Bereiche der Kette so abdecken, dass keine Schmutzpartikel hineinfallen können.

Eine gattungsgemäße Förderkette ist aus der EP 1024097 A2 bekannt. Hierbei handelt es sich um eine Stauförderkette (siehe auch EP 0764599 A2). Anstelle der Staurollen oder wie in Fig. 4 anstelle von Tragplatten 10, 11 können auch Bürstenräder auf den Kettenhülsen angeordnet werden.

Auch in der JP 02075513 ist die Verwendung von Bürstenrädem sowohl in horizontaler (Bürste 31) als auch in vertikaler Richtung (Bürsten 33) bekannt, die vermutlich innerhalb einer Führungsschiene mitlaufen.

Eine weitere Bürstenanordnung an einer Förderkette ist in der JP 08217215 beschrieben. Die Kette läuft durch eine rohrförmige Schiene 10. Anstelle eines Kettengliedes ist ein Bürstenelement zwischengefügt, das einen Bürstenkranz aufweist, der sich in Querschnittsebene der Führung aufspannt und diese vollständig reinigen kann.

Die EP 0450734 A2 befasst sich mit einer Förderkette, bei der ein Kettenglied durch eine Bürsteneinrichtung ersetzt wird. Die Borsten spannen sich radial auf und reinigen das Innere einer Führungsschiene.

Durch diese Maßnahme wird die Förderkette mit einer aktiven Reinigungsfunktion ausgestattet. Es wird demnach nicht nur mittels einer Abdeckung versucht, das Eindringen von Spänen zu verhindern, sondern es werden vielmehr Schmutzpartikel aktiv aus dem Führungsbereich der Kette entfernt. Solche Bürstenelemente müssen nicht über die gesamte Länge der Kette angeordnet werden. Vielmehr reicht es, sie vereinzelt so zu platzieren, dass die notwendige Reinigungsfunktion sichergestellt ist.

Es ist nunmehr die Aufgabe der vorliegenden Erfindung, eine konstruktiv verbesserte Förderkette mit Reinigungsfunktion bereitzustellen.

Diese Aufgabe wird erfindungsgemäß dadurch gelöst, dass die Befestigungsaufnahme auf das Innenkettenglied aufgesteckt ist, und eine Rasteinrichtung umfasst, die federnd mit der Hülse des Innenkettengliedes verrastet ist. Demnach kann das Bürstenelement an verschiedenen Abschnitten der Kette verrastet werden. Durch diese lösbare Anordnung ist ein Austausch jederzeit möglich. Prinzipiell besteht die Möglichkeit, solche Bürstenelemente an jeglichen geeigneten Stellen der Förderkette zu verrasten. Durch das Ausbilden der Befestigungsaufnahme als Aufsteckaufnahme, können Standardketten auch nachträglich mit solchen Bürstenelementen ausgerüstet werden.

Von Vorteil ist eine Ausführungsform, bei der das Bürstenelement mit der Befestigungsaufnahme im Wesentlichen formschlüssig auf einen Umfangsbereich zumindest einer Hülse des Innenkettengliedes aufgesteckt ist. Diese Konstruktion führt zu einer stabilen Befestigung.

Günstigerweise kann das Bürstenelement ein, die mindestens eine Befestigungsaufnahme umfassendes Kunststoffbasisteil und darin fest verankerte Borsten umfassen. Solche Kunststoffbasisteile können an die unterschiedlichsten Gegebenheiten sehr einfach angepasst werden. Auch die Bereiche, in denen die Borsten verankert werden, können unterschiedlich ausgestaltet sein. So können die Borsten in Schräg-, X-, Parallel- und anderen Stellungen angeordnet werden. Auch die Verwendung unterschiedlicher Materialien sowie Borstengeometrien ist denkbar.

Gemäß einer Ausführungsform kann die Rasteinrichtung von einer Rastnut mit zumindest einseitig federnd ausgestattetem Randbereich gebildet sein, wobei die Rastnut die Hülse des Innenkettengliedes über einen Winkelbereich von mehr als 180° umgibt. Eine solche Rastnut sorgt für ein kippsicheres Anbringen z.B. über die gesamte Länge der Hülse. Bei entsprechender Wahl eines geeigneten Bürstenelementwerkstoffes ergeben sich für den Betrieb geeignete Rastkräfte, so dass ein unbeabsichtigtes Lösen des Bürstenelementes nicht möglich ist.

Darüber hinaus kann das Bürstenelement ein Befestigungsaufnahmepaar umfassen, das Bürstenelemente als Überbrückungseinheit zwischen den zwei Hülsen eines Innen kettengliedes angeordnet sein und jede Befestigungsaufnahme des Befestigungsaufnahmepaars auf eine der Hülsen des Innenkettengliedes aufgesteckt sein. Durch diese doppelte Aufsteckung des Bürstenelementes ist eine sichere Führung und beste Fixierung desselben an den übrigen Kettenelementen gegeben. Des Weiteren wird die Lücke zwischen zwei Hülsen geschlossen, so dass neben der Reinigungsfunktion durch die Borsten auch eine Abdeckfunktion zur Schließung dieser Lücke übernommen wird.

Die Förderkette kann als Stauförderkette mit auf Hülsen der Innen kettenglieder angeordneten Staurollen ausgebildet sein, wobei einige Staurollen durch Bürstenelemente ersetzt sind. Die Bürstenelemente werden so angeordnet, dass möglichst noch eine große Tragfähigkeit durch die Staurollen gegeben ist, und nur vereinzelt ein Ersatz durch die Bürstenelemente vorhanden ist. Die Anzahl der Bürstenelemente hängt von der gewollten Reinigungsfunktion ab.

Vorteilhafterweise können zumindest die Borsten der Bürstenelemente bereichsweise die Staurollen im Einsatz überragen. Hierdurch wird sichergestellt, dass eine Führungsschiene sauber ausgebürstet wird. Durch den Überstand kann auch die Anpresskraft, mit der die Borsten an eine zu reinigende Fläche angedrückt werden, eingestellt werden.

Des Weiteren kann das Innenkettenglied zwei Hülsen und eine diese verbindende mittig aufgepresste Mittenlasche und das Außenkettenglied zwei Bolzen und zwei diese verbindende parallel angeordnete Außenlaschen umfassen, wobei ein Bürstenelement in den Zwischenraum zwischen einer Außenlasche und der Mittenlasche angeordnet ist. Bei dieser Ausführungsform einer Förderkette können sehr schmale Bürstenelemente zum Einsatz kommen, weil sie nur in dem Raum zwischen der Mittenlasche des Innenkettengliedes und einer Außenlasche des Außenkettengliedes angeordnet werden.

Gemäß einer weiteren Ausführungsform ist vorgesehen, dass zwei Bürstenelemente zu einer Baueinheit mit mittigem Schlitz ausgestaltet sind und in den mittigen Schlitz die Mittenlasche aufgenommen ist. Die so aufgebaute Bürsteneinheit deckt somit die Mittenlasche nach unten ab. Es besteht auch die Möglichkeit, dass die Mittenlasche zur weiteren Fixierung herangezogen wird.

Bevorzugt können die Bolzen der Außenkettenglieder seitlich überstehen und auf diesen überstehenden Endabschnitten jeweils eine Laufrolle angeordnet sein. Die eigentliche Führungsfunktion der Förderkette wird dann über diese Laufrollen übernommen. In die Zwischenräume zwischen den Laufrollen greifen in aller Regel auch die antreibenden Kettenräder ein, so dass der Mittenbereich der Kette den Staurollen und den Bürstenelementen vorbehalten ist.

Des Weiteren bezieht sich die Erfindung auf ein Bürstenelement für eine Förderkette nach einem der Ansprüche 1 bis 10 mit zumindest einer als Rasteinrichtung ausgestalteten Befestigungsaufnahme, die auf einer Hülse eines Innenkettengliedes der Förderkette federnd verrastbar und auf diese aufsteckbar ausgestaltet ist.

Im Folgenden werden Ausführungsbeispiele der Erfindung anhand einer Zeichnung näher erläutert. Es zeigen:
- Fig. 1: eine Seitenansicht eines Ausschnitts einer Stauförderkette mit Bürstenelementen,
- Fig. 2: eine Querschnittsdarstellung einer Stauförderkette mit einer ersten Variante eines Bürstenelementes,
- Fig. 3: eine Querschnittsdarstellung einer Stauförderkette mit einer zweiten Variante eines Bürstenelementes,
- Fig. 4: eine Querschnittsdarstellung einer Stauförderkette mit einer dritten Variante eines Bürstenelementes,
- Fig. 5: eine Seitenansicht des Bürstenelementes aus Fig. 4,
- Fig. 6: das Bürstenelemente aus Fig. 5 in einer Unteransicht,
- Fig. 7: eine Seitenansicht einer vierten Variante eines Bürstenelementes,
- Fig. 8: eine Seitenansicht eines Bürstenelementes,
- Fig. 9: das Bürstenelement aus Fig. 2 beim Umlauf um eine Umlenkrolle,
- Fig. 10: eine schematische Seitenansicht, die das Umlaufen der Stauförderkette aus Fig. 1 um ein Kettenrad veranschaulicht.

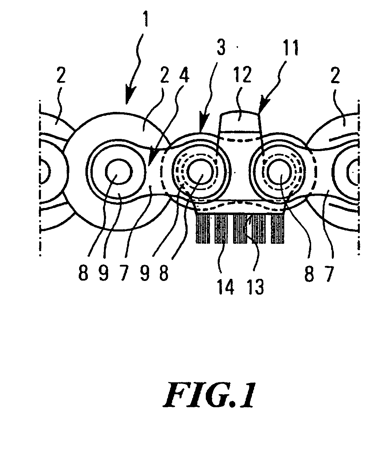

In Fig. 1 ist eine Stauförderkette 1 dargestellt, die Staurollen 2 in überlappender Anordnung bzw. Zick-Zack-Anordnung aufweist. Die Stauförderkette 1 setzt sich aus abwechselnd hintereinander gereihten Innenkettengliedern 3 und Außenkettengliedern 4 zusammen. Jedes Innenkettenglied 3 umfasst zwei parallel zueinander angeordnete Hülsen 5, die durch eine mittig aufgepresste Mittenlasche 6 auf Abstand gehalten werden. Die Außenkettenglieder 4 umfassen zwei parallele Außenlaschen 7, zwei im parallelen Abstand zueinander in diese eingepresste Bolzen 8 und vier Laufrollen 9, von denen jeweils eine auf den über die Außenlasche 7 überstehenden Endbereichen des Bolzens 8 drehbar angeordnet ist. Das Ende der Bolzen 8 wird vernietet, so dass die Laufrolle zwischen der Außenfläche der Außenlasche 7 und dem Nietkopf gehalten ist. Jedes Kettengelenk 10 wird demnach von einem Bolzen 8 eines Außenkettengliedes 4 und einer Hülse 5 des Innenkettengliedes 3, durch die sich der Bolzen 8 erstreckt, gebildet.

Die Staurollen 2 sind jeweils drehbar auf einem Außenflächenbereich der Hülse 5 angeordnet. Die Breite der Staurollen 2 ist dabei so bemessen, dass sie sich jeweils zwischen der Mittenlasche 6 und der Innenfläche der Außenlasche 7 befindet. Da die Anordnung der Staurollen 2 abwechselnd einmal auf der rechten und einmal auf der linken Seite (von Hülse zu Hülse) der Mittenlasche 6 befinden, ist eine teilweise Überlappung der Staurollen 2 gegeben. In einer Reihe befindet sich eine Staurolle jeweils nur auf jeder zweiten Hülse 5.

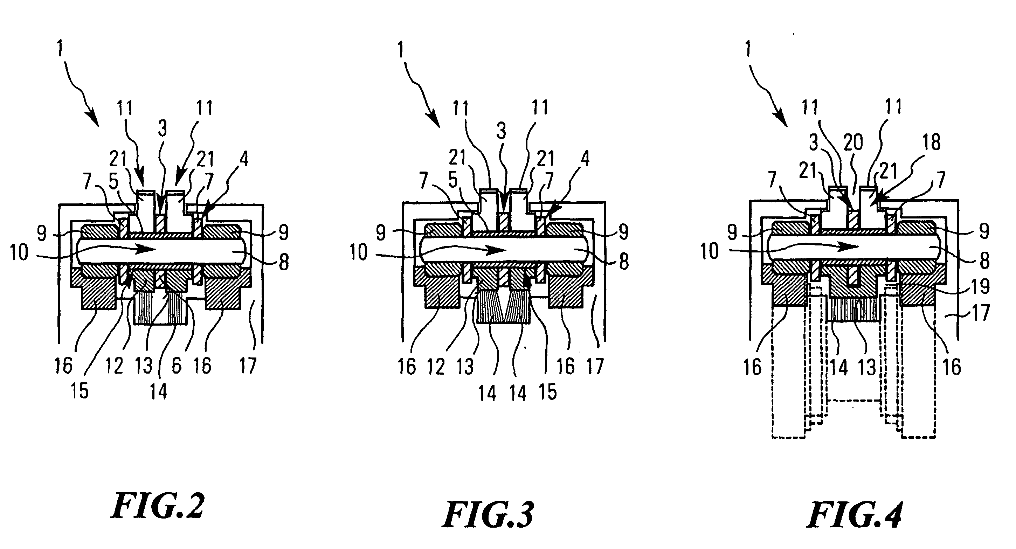

Über die Länge der Stauförderkette 1 zufällig oder in bestimmten Abständen verteilt, ist eine Staurolle 2 durch ein Bürstenelement 11 ersetzt. Das in Fig. 1 uns 2 dargestellte Bürstenelement weist im Wesentlichen eine gleiche Breite auf, wie eine Staurolle 2, weshalb auf einer Hülse 5 an der entsprechend vorgesehenen Stelle sowohl links als auch rechts von der Mittenlasche 6 eines dieser Bürstenelemente 11 angeordnet ist (siehe insbesondere Fig. 2). Das Bürstenelement 11 umfasst ein Basisteil 12 aus Kunststoff, in dessen unteren Endfläche 13 Borsten 14 verankert sind. Die Bürstenelemente 11 werden auf Außenflächenbereiche der Hülsen 5 rastend aufgesteckt und weisen hierzu Befestigungsaufnahmen 15 auf.

in Fig. 2 ist auch zu erkennen, dass die Laufrollen 9 auf Führungsschienen 16 laufen, die zu einer andeutungsweise dargestellten Kanalführung 17 gehören. Der Grund der Kanalführung 17 wird mittels der Borsten 14 des Bürstenelementes 11 saubergehalten. Späne, Staub und ähnliche Fremdkörper können sich im Wesentlichen nicht mehr in diesem Bereich festsetzen. Darüber hinaus sorgt das Kunststoffbasisteil 12 durch Verschließen der Lücke zwischen zwei Hülsen 5 zusätzlich für eine Abdeckung. Hierzu weist das Bürstenelement 11 zwei Befestigungsaufnahmen 15 auf, so dass es auf beide Hülsen 5 eines Innenkettengliedes 3 aufsteckbar ist.

Anhand der Fig. 3 ist eine weitere Ausführungsform dargestellt. Diese unterscheidet sich zur Ausführungsform der Fig. 2 nur dadurch, dass die Borsten 14 an der unteren Endfläche 13 anders angestellt sind und so einen breiteren Bereich der Kanalführung 17 sauberhalten können. Sämtliche anderen Bestandteile sind baugleich, weshalb auf die vorangegangene Beschreibung verwiesen wird.

Anhand der Fig. 4, 5 und 6 wird nunmehr eine weitere Variante des Bürstenelementes 11 beschrieben. Da sich zum vorangegangenen Aufbau auch wiederum nur das Bürstenelement 11 unterscheidet, wird bezüglich des restlichen Aufbaus der Stauförderkette 1 wieder auf die vorangegangene Beschreibung verwiesen.

In diesem Ausführungsbeispiel sind zwei Bürstenelemente 11 zu einer Bürsteneinheit 18 zusammengefasst. Hierzu befindet sich im unteren Bereich ein Verbindungssteg 19. Dieser dient auch zur Anbringung von Borsten 14, so dass Borsten über die gesamte Breite der durch den Verbindungssteg 19 verbreiterten unteren Endfläche 13 angeordnet werden können. Die Mittenlasche 6 wird demnach nach unten hin durch den Verbindungssteg 19 abgedeckt. Die Bürsteneinheit 18 weist hierzu einen Schlitz 20 auf, in dem die Mittenlasche 6 angeordnet ist.

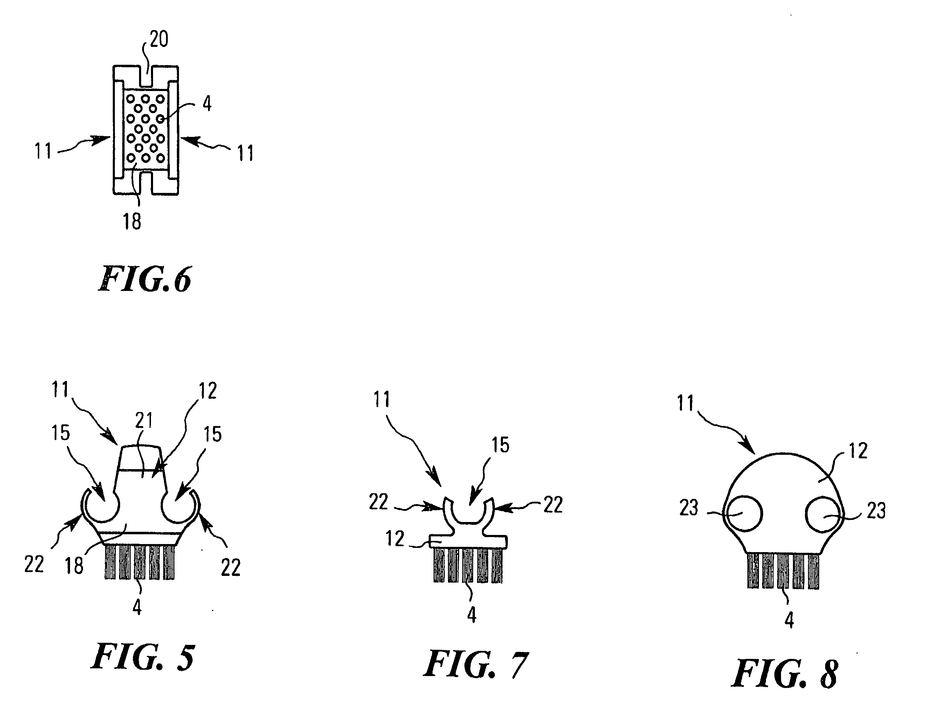

Es sei angemerkt, dass die in Fig. 5 dargestellte Seitenansicht auch die Seitenansicht der Ausführungsform der Fig. 2 und 3 sein könnte, weshalb Anmerkungen zu dieser ebenfalls übertragbar sind.

In Fig. 5 ist zu erkennen, dass das Kunststoffbasisteil 12 einen mittleren Zapfenbereich 21 aufweist, der sich zwischen zwei Hülsen 5 des Innenkettengliedes 3 nach oben erstreckt. Seitlich von diesem Zapfen 21 befinden sich die nutförmig ausgestatteten Befestigungsaufnahmen 15. Die Befestigungsaufnahmen 15 weisen eine zylindermantelförmige Innenfläche auf und sind an ihrem oberen Ende offen. Sie umschließen jedoch einen Winkelbereich von > 180°, so dass sie die Hülsen 5 umgreifen können. Der äußere Randbereich 22 dieser Befestigungsaufnahmen 15 ist federnd ausgestaltet, so dass eine Verrastung auf der zylindermantelförmigen Außenfläche der Hülsen 5 stattfinden kann. Entsprechend ist der Mittenabstand der Befestigungsaufnahmen 15 an den Mittenabstand der Hülsen angepasst. Aus der Fig. 5 ist auch zu erkennen, dass die Befestigungsaufnahmen 15 mit einem leichten Hinterschnitt in den Zapfen 21 übergehen und somit eine Verstärkung der Haltefunktion erreicht ist. Insgesamt ist der Abstand von der Mittellinie der Befestigungsaufnahmen 15 zum freien Ende der Borsten 14 größer als der Radius der Staurollen 2 der zugehörigen Stauförderkette 1.

In Fig. 7 ist eine weitere Variante zu erkennen. Diese ist auf eine einzige Hülse 5 aufsteckbar. Die einzige Befestigungsaufnahme 15 ist verstärkt ausgeführt und umschließt ebenfalls einen Winkelbereich von > 180°, so dass eine Verrastung auf einer Hülse 5 stattfinden kann. Im Wesentlichen ist wieder eine zylindermantelförmige Innenfläche der nutförmigen Befestigungsaufnahme 15 vorgesehen. Im vorliegenden Fall sind beide Randbereiche 22 federnd ausgestaltet.

Die Fig. 8 zeigt ein nicht erfindungsgemäßes Bürstenelement 11, bei dem ein relativ großes Kunststoffbasisteil 12 vorgesehen ist. Dieses ist mit Öffnungen 23 versehen, die als Befestigungsaufnahmen 15 dienen. Bei dieser Variante muss die Montage des Bürstenelementes 11 bereits während der Kettenmontage ertolgen. Sämtliche anderen Ausführungsformen sind auch nachträglich einbringbar, sofern eine Staurolle 2 weggelassen wurde. Auch bei den Konstruktionen der Fig. 7 und 8 können zwei Bürstenelemente 11 zu einer Bürsteneinheit 18 zusammengefasst werden, wie dies die Ausführungsform der Fig. 4 bis 6 veranschaulicht.

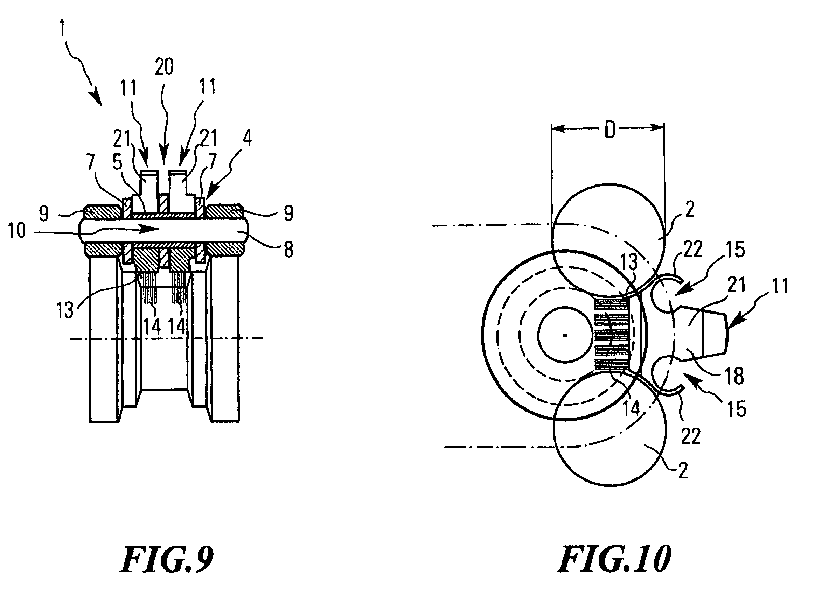

Anhand der Fig. 9 und 10 ist nunmehr gezeigt, wie die Stauförderkette 1 um eine Umlenkrolle herumgeführt ist. Zur Verdeutlichung ist eine Umlenkrolle mit kleinstmöglichem Durchmesser gewählt worden. Anhand der Fig. 10 ist zu erkennen, dass die Außenkontur des Bürstenelementes 11 so gewählt ist, dass sich das Bürstenelement 11 optimal zwischen zwei Staurollen 2 einer Reihe angeordnet ist. Hierzu geht die untere Endfläche 13 mittels eines an den Durchmesser D der Staurollen 2 angepassten Radius in den Randbereich 22 der Befestigungsaufnahme 15 über. Die Borsten erstrecken sich über eine Länge, die im Wesentlichen dem Abstand dieser beiden Staurollen 2 beim Umlenkvorgang entspricht.

Der nach oben überstehende Zapfen 21 des Kunststoffbasisteils 12 kann bei dem verrasteten Bürstenelementen 11 zum Herausdrücken bzw. Entrasten des aufgesteckten Bürstenelementes 11 herangezogen werden. Demnach ist ein Austausch bei Verschleiß oder ein Austausch gegen ein andersartiges Bürstenelement jederzeit möglich.

## Patentansprüche

1. Förderkette mit abwechselnd aneinander gereihten Innen- und Außenkettengliedem (3,4), die jeweils über ein Kettengelenk (10) miteinander verbunden sind und das Kettengelenk (10) eine Hülse (5) des Innenkettengliedes (3) und ein sich durch die Hülse (5) erstreckenden Bolzen (8) des Außenkettengliedes (4) umfasst, wobei zumindest ein Bürstenelement (11) vorgesehen ist, das zumindest eine Befestigungsaufnahme (15) umfasst und das Bürstenelement mit der Befestigungsaufnahme (15) im Wesentlichen formschlüssig auf einem Innenkettenglied (3) angeordnet ist, **dadurch gekennzeichnet, dass** die Befestigungsaufnahme (15) auf das Innenkettenglied (3) aufsteckbar ist und eine Rasteinrichtung umfasst, die federnd mit einer Hülse (5) des Innenkettengliedes (3) verrastet ist.

2. Förderkette nach Anspruch 1, **dadurch gekennzeichnet, dass** das Bürstenelement (11) mit der Befestigungsaufnahme (15) im Wesentlichen formschlüssig auf einen Umfangsbereich zumindest einer Hülse (5) des Innenkettengliedes (3) aufgesteckt ist.

3. Förderkette nach Anspruch 1 oder 2, **dadurch gekennzeichnet, dass** das Bürstenelement (11) ein die mindestens eine Befestigungsaufnahme (15) umfassendes Kunststoffbasisteil (12) und darin fest verankerte Borsten (14) umfasst.

4. Förderkette nach einem der Ansprüche 1 bis 3, **dadurch gekennzeichnet, dass** die Rasteinrichtung von einer Rastnut mit zumindest einseitig federnd ausgestaltetem Randbereich (22) gebildet ist und die Rastnut die Hülse (5) des Innenkettengliedes (3) über einen Winkelbereich von mehr als 180° umgibt.

5. Förderkette nach einem der Ansprüche 1 bis 4, **dadurch gekennzeichnet, dass** das Bürstenelement (11) ein Befestigungsaufnahmepaar umfasst, das Bürstenelement (11) als Überbrückungseinheit zwischen den zwei Hülsen (5) eines Innenkettengliedes (3) angeordnet ist und jede Befestigungsaufnahme (15) des Befestigungsaufnahmepaars auf eine der Hülsen (5) des Innenkettengliedes (3) aufgesteckt ist.

6. Förderkette nach einem der vorangegangenen Ansprüche 1 bis 5, die als Stauförderkette mit auf Hülsen (5) der Innenkettenglieder (3) angeordneten Staurollen (2) ausgebildet ist, **dadurch gekennzeichnet, dass** zumindest eine Staurolle (2) durch ein Bürstenelement (11) ersetzt ist.

7. Förderkette nach Anspruch 6, **dadurch gekennzeichnet, dass** zumindest die Borsten (14) der Bürstenelemente (11) bereichsweise die Staurollen (2) im Einsatz überragen.

8. Förderkette nach einem der vorangegangenen Ansprüche, **dadurch gekennzeichnet, dass** das Innenkettenglied (3) zwei Hülsen (5) und eine diese verbindende mittig aufgepresste Mittenlasche (6) und das Außenkettenglied (4) zwei Bolzen (8) und zwei diese verbindende parallel angeordnete Außenlaschen (7) umfasst und ein Bürstenelement (11) in dem Zwischenraum zwischen einer Außenlasche (7) und der Mittenlasche (6) angeordnet ist.

9. Förderkette nach Anspruch 8, **dadurch gekennzeichnet, dass** zwei Bürstenelemente (11) zu einer Baueinheit (18) mit mittigem Schlitz (20) ausgestaltet sind und in den mittigen Schlitz (20) die Mittenlasche (6) aufgenommen ist.

10. Förderkette nach einem der Ansprüche 6 bis 9, **dadurch gekennzeichnet, dass** die Bolzen (8) der Außenkettenglieder (4) seitlich überstehen und auf diesen überstehenden Endabschnitten jeweils eine Laufrolle (9) angeordnet ist.

11. Bürstenelement (11) für eine Förderkette nach einem der Ansprüche 1 bis 10, mit zumindest einer als Rasteinrichtung ausgestalteten Befestigungsaufnahme (15), die auf einer Hülse eines Innenkettengliedes der Förderkette federnd verrastbar und auf diese aufsteckbar ausgestaltet ist.

## Claims

1. A conveyor chain comprising inner chain links (3) and outer chain links (4) which are arranged in alternating succession and which are interconnected by respective chain hinges (10), and said chain hinge (10) comprising a sleeve (5) of the inner chain link (3) and a pin (8) forming part of the outer chain link (4) and extending through the sleeve (5), wherein at least one brush element (11) is provided, which comprises at least one fastening reception means (15), and said brush element is attached via the fastening reception means (15) to an inner chain link (3) such that it is essentially in positive engagement therewith, **characterized in that** the fastening reception means (15) is adapted to be pushed onto the inner chain link (3) and comprises a detent means which is in elastic, locking engagement with a sleeve (5) of the inner chain link (3).

2. A conveyor chain according to claim 1, **characterized in that** the brush element (11) is attached via the fastening reception means (15) to a peripheral area of at least one sleeve (5) of the inner chain link (3) such that it is essentially in positive engagement therewith.

3. A conveyor chain according to claim 1 or 2, **characterized in that** the brush element (11) comprises a plastic base member (12) including said at least one fastening reception means (15), and bristles (14) which are fixedly anchored in said plastic base member (12).

4. A conveyor chain according to one of the claims 1 to 3, **characterized in that** the detent means is defined by a detent groove provided with a resilient boundary area (22) on at least one side thereof, and that the detent groove encompasses the sleeve (5) of the inner chain link (3) over an angular area of more than 180°.

5. A conveyor chain according to one of the claims 1 to 4, **characterized in that** the brush element (11) comprises a pair of fastening reception means, that the brush element (11) is arranged as a bridging unit between the two sleeves (5) of an inner chain link (3), and that each fastening reception means (15) of the pair of fastening reception means is attached to one of the sleeves (5) of the inner chain link (3).

6. A conveyor chain according to one of the preceding claims 1 to 5, which is implemented as an accumulation conveyor chain including accumulation rolls (2) which are arranged on sleeves (5) of the inner chain links (3), **characterized in that** at least one accumulation roll (2) is replaced by a brush element (11).

7. A conveyor chain according to claim 6, **characterized in that** at least the bristles (14) of the brush elements (11) project beyond the accumulation rolls (2) in certain areas when the conveyor chain is in operation.

8. A conveyor chain according to one of the preceding claims, **characterized in that** the inner chain link (3) comprises two sleeves (5) and a centrally pressed-on central link plate (6) interconnecting these two sleeves, and that the outer chain link (4) comprises two pins (8) and two outer link plates (7) which are arranged in parallel and which interconnect these pins (8), and that a brush element (11) is arranged in the space between an outer link plate (7) and the central link plate (6).

9. A conveyor chain according to claim 8, **characterized in that** two brush elements (11) are implemented such that they form a structural unit (18) with a central slot (20) and that the central link plate (6) is accommodated in said central slot (20).

10. A conveyor chain according to one of the claims 6 to 9, **characterized in that** the pins (8) of the outer chain links (4) project laterally and that a running roller (9) is arranged on each of these projecting end portions.

11. A brush element (11) for a conveyor chain according to one of the claims 1 to 10, said brush element (11) comprising at least one fastening reception means (15) which is implemented as a detent means and which is adapted to be brought into elastic, locking engagement with a sleeve of an inner chain link of the conveyor chain and to be attached thereto.

## Revendications

1. Chaîne transporteuse comportant des maillons de chaîne externe et interne (3, 4) rangés les uns à côté des autres de manière alternée, qui sont respectivement reliés les uns aux autres par le biais d'une articulation de chaîne (10), l'articulation de chaîne (10) comprenant une douille (5) du maillon de chaîne interne (3) et un axe. (8) du maillon de chaîne externe (4) qui s'étend à travers la douille (5), alors qu'il est prévu au moins un élément à brosse (11) qui comprend au moins un logement de fixation (15), l'élément à brosse comprenant le logement de fixation (15) étant disposé sur un maillon de chaîne interne (3) essentiellement par coopération de formes, **caractérisé en ce que** le logement de fixation (15) peut être enfiché sur le maillon de chaîne interne (3) et comprend un dispositif à crans d'arrêt qui est encliqueté de manière élastique avec une douille (5) du maillon de chaîne interne (3).

2. Chaîne transporteuse selon la revendication 1, **caractérisée en ce que** l'élément à brosse (11) comprenant le logement de fixation (15) est enfiché, essentiellement par coopération de formes, sur une zone circonférentielle d'au moins une douille (5) du maillon de chaîne interne (3).

3. Chaîne transporteuse selon la revendication 1 ou 2, **caractérisée en ce que** l'élément à brosse (11) comprend une pièce de base en plastique (12), comportant au moins un logement de fixation (15), et des poils (14) fermement ancrés à l'intérieur.

4. Chaîne 'transporteuse selon l'une des revendications 1 à 3, **caractérisée en ce que** le dispositif à crans est formé d'une rainure d'arrêt comportant une zone de bord (22) configurée de manière élastique au moins d'un côté et **en ce que** la rainure d'arrêt entoure la douille (5) du maillon de chaîne interne (3) sur une zone angulaire supérieure à 180°.

5. Chaîne transporteuse selon l'une des revendications 1 à 4, **caractérisée en ce que** l'élément à brosse (11) comprend une paire de logements de fixation, l'élément à brosse (11) est disposé en tant qu'unité de pontage entre les deux douilles (5) d'un maillon de chaîne interne (3) et chaque logement de fixation (15) de la paire de logements de fixation est enfiché sur l'une des douilles (5) du maillon de chaîne interne (3).

6. Chaîne transporteuse selon l'une des revendications précédentes 1 à 5 qui est configurée en tant que chaîne transporteuse d'accumulation comportant des rouleaux (2) disposés sur des douilles (5) des maillons de chaîne interne (3), **caractérisée en ce qu'**au moins un rouleau (2) est remplacé par un élément a brosse (11).

7. Chaîne transporteuse selon la revendication 6, **caractérisée en ce qu'**au moins les poils (14) des éléments à brosse (11) dépassent, par zone, les rouleaux (2) lors de l'intervention.

8. Chaîne transporteuse selon l'une des revendications précédentes, **caractérisée en ce que** le maillon de chaîne interne (3) comprend deux douilles (5) et une maille centrale (6) serrée au milieu reliant ces douilles, et le maillon de chaîne externe (4) comprend deux axes (8) et deux mailles externes (7), disposées en parallèle, reliant ces axes, et un élément à brosse (11) est disposé dans l'espace situé entre une maille externe (7) et la maille centrale (6).

9. Chaîne transporteuse selon la revendication 8, **caractérisée en ce que** deux éléments à brosse (11) sont configurés pour former une unité modulaire (18) avec une fente (20) et **en ce que** la maille centrale (6) est logée dans la fente centrale (20).

10. Chaîne transporteuse selon l'une des revendications 6 à 9, **caractérisée en ce que** les axes (8) des maillons de chaîne externe (4) dépassent latéralement et **en ce qu'**un galet (9) est respectivement disposé sur ces sections finales en saillie.

11. Elément à brosse (11) pour une chaîne transporteuse selon l'une des revendications 1 à 10, comportant au moins un logement de fixation (15), configuré en tant que dispositif à crans d'arrêt, qui peut s'encliqueter de manière élastique sur une douille d'un maillon de chaîne interne de la chaîne transporteuse et peut être enfiché sur celle-ci.
